(19) Europäisches Patentamt
European Patent Office
Office européen des brevets

(11) EP 4 808 200 A1

(12) EUROPEAN PATENT APPLICATION
published in accordance with Art. 153(4) EPC

(43) Date of publication:
**16.09.2026 Bulletin 2026/38**

(21) Application number: **24907751.2**

(22) Date of filing: **29.10.2024**

(51) International Patent Classification (IPC):
***H04W 28/02*** *(2009.01)* ***H04W 88/08*** *(2009.01)*
***H04W 80/02*** *(2009.01)*

(52) Cooperative Patent Classification (CPC):
**H04W 28/02; H04W 80/02; H04W 88/08**

(86) International application number:
**PCT/KR2024/016707**

(87) International publication number:
**WO 2025/135466 (26.06.2025 Gazette 2025/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.12.2023 KR 20230185248**
**20.12.2023 KR 20230187779**

(71) Applicant: **Samsung Electronics Co., Ltd.**
**Suwon-si, Gyeonggi-do 16677 (KR)**

(72) Inventors:
- **LEE, Donghoo**
  **Suwon-si, Gyeonggi-do 16677 (KR)**
- **LEE, Jeongmin**
  **Suwon-si, Gyeonggi-do 16677 (KR)**
- **SUNG, Yoonyoung**
  **Suwon-si, Gyeonggi-do 16677 (KR)**
- **HA, Taeho**
  **Suwon-si, Gyeonggi-do 16677 (KR)**
- **HAN, Younggoo**
  **Suwon-si, Gyeonggi-do 16677 (KR)**

(74) Representative: **HGF**
**HGF Limited**
**4th Floor, 1 City Square**
**Leeds LS1 2ES (GB)**

(54) **ELECTRONIC DEVICE AND METHOD FOR CONTROLLING TRAFFIC IN WIRELESS COMMUNICATION SYSTEM**

(57) In embodiments, an electronic device of a lower network node is provided. The electronic device may comprise: a memory for storing instructions; at least one transmission/reception device; and at least one processor. When executed by the at least one processor, the instructions can cause the electronic device to: transmit a first status message including first data amount information for a data radio bearer to an upper network node (a central unit) through the at least one transmission/reception device; receive downlink (DL) data for the data radio bearer from the upper network node through the at least one transmission/reception device; determine second data amount information for the data radio bearer on the basis of a packet loss metric, obtained from the DL data, for the path between the upper network node and a lower network node; and transmit a second status message including the second data amount information to the upper network node through the at least one transmission/reception device.

TRANSMIT FIRST STATUS MESSAGE INCLUDING FIRST DATA AMOUNT INFORMATION FOR DATA RADIO BEARER TO CU
601
RECEIVE DOWNLINK DATA
603
DETERMINE SECOND DATA AMOUNT INFORMATION BASED ON PACKET LOSS METRIC
605
TRANSMIT SECOND STATUS MESSAGE INCLUDING SECOND DATA AMOUNT INFORMATION FOR DATA RADIO BEARER TO CU
607

FIG. 6

EP 4 808 200 A1

## Description

### [Technical Field]

The present disclosure relates to a wireless communication system. More specifically, the present disclosure relates to an electronic device and a method for controlling traffic in a wireless communication system.

### [Background Art]

A base station may provide an access network to a terminal. In order to provide the access network, the base station may be implemented, according to communication protocols, in a distributed deployment according to a central unit (CU) configured to perform functions of upper layers and a distributed unit (DU) configured to perform functions of lower layers.

The above-described information may be provided as related art for the purpose of helping the understanding of the present disclosure. No claim or determination is raised as to whether any of the above-described content may be applied as prior art related to the present disclosure.

### [Disclosure]

### [Technical Solution]

In embodiments, an electronic device of a lower network node is provided. The electronic device may comprise memory storing instructions, at least one transceiver, and at least one processor. The instructions, when executed by the at least one processor, may cause the electronic device to transmit, through the at least one transceiver to an upper network node, a first status message including first data amount information for a data radio bearer, receive, through the at least one transceiver from the upper network node, downlink (DL) data for the data radio bearer, determine second data amount information for the data radio bearer based on a packet loss metric for a path between the upper network node and the lower network node obtained from the downlink data, and transmit, through the at least one transceiver to the upper network node, a second status message including the second data amount information for the data radio bearer.

In embodiments, a method performed by a lower network node may comprise transmitting, to an upper network node, a first status message including first data amount information for a data radio bearer, receiving, from the upper network node, downlink (DL) data for the data radio bearer, determining second data amount information for the data radio bearer based on a packet loss metric for a path between the upper network node and the lower network node obtained from the downlink data, and transmitting, to the upper network node, a second status message including the second data amount information for the data radio bearer.

In embodiments, a non-transitory computer-readable storage medium is provided. The non-transitory computer-readable storage medium may store instructions that, when executed by a processor of a lower network node, cause the lower network node to perform operations including transmitting, to an upper network node, a first status message including first data amount information for a data radio bearer, receiving, from the upper network node, downlink (DL) data for the data radio bearer, determining second data amount information for the data radio bearer based on a packet loss metric for a path between the upper network node and the lower network node obtained from the downlink data, and transmitting, to the upper network node, a second status message including the second data amount information for the data radio bearer.

In embodiments, an electronic device of a lower network node is provided. The electronic device may comprise at least one transceiver including one or more communication circuits and at least one processor including one or more processing circuits. The at least one processor may be configured to transmit, through the at least one transceiver to an upper network node, a first status message including first data amount information for a data radio bearer. The at least one processor may be configured to receive, through the at least one transceiver from the upper network node, downlink (DL) data for the data radio bearer. The at least one processor may be configured to determine second data amount information for the data radio bearer based on a packet loss metric for a path between the upper network node and the lower network node obtained from the downlink data. The at least one processor may be configured to transmit, through the at least one transceiver to the upper network node, a second status message including the second data amount information for the data radio bearer.

### [Description of the Drawings]

The above and other aspects, features, and advantages of certain embodiments of the present disclosure will become more apparent from the following description taken in conjunction with the accompanying drawings.

FIG. 1A to FIG. 1B illustrate examples of a wireless communication system.
FIG. 2A illustrates examples of a control plane (C-plane).
FIG. 2B illustrates examples of a user plane (U-plane).
FIGS. 3A, 3B, and 3C illustrate examples of function split according to a communication protocol.
FIG. 4A illustrates an example of signaling between a central unit (CU) and a distributed unit (DU).
FIG. 4B illustrates an example of signaling between a central unit (CU) and a distributed unit (DU) via a routing node.
FIG. 5 illustrates a flow of downlink packet processing.
FIG. 6 illustrates an operation flow of an electronic device for downlink traffic control.
FIGS. 7A and 7B illustrate flows of downlink packet processing according to downlink traffic control.
FIG. 8 illustrates an example of components of an electronic device for downlink traffic control.

**[Mode for Invention]**

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

In the following description, terms referring to a signal (e.g., signal, information, message, signaling), terms referring to a data type (e.g., list, set, subset), terms referring to a calculation state (e.g., step, operation, procedure), terms referring to data (e.g., packet, user stream, information, bit, symbol, codeword), terms referring to a resource (e.g., symbol, slot, subframe, radio frame, subcarrier, resource element (RE), resource block (RB), bandwidth part (BWP), occasion), terms referring to a channel, terms referring to network entities, terms referring to a component of a device, and the like, are illustrated for convenience of description. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

The present disclosure describes various embodiments using terms used in certain communication standards (e.g., 3rd Generation Partnership Project (3GPP), European Telecommunications Standards Institute (ETSI), extensible radio access network (xRAN), and open-radio access network (O-RAN)), but which is merely an example for description. Various embodiments of the present disclosure may be easily modified and applied in another communication system.

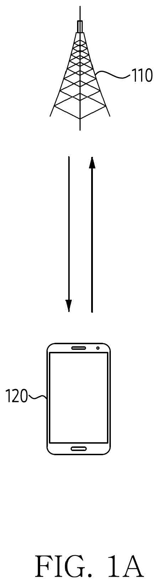

FIG. 1A to FIG. 1B illustrate examples of a wireless communication system.

Referring to FIG. 1A, FIG. 1A illustrates a base station 110 and a terminal 120 as a part of nodes using a wireless channel in the wireless communication system. Although FIG. 1A illustrates only one base station, the wireless communication system may further include another base station identical or similar to the base station 110.

The base station 110 is a network infrastructure providing wireless access to the terminal 120. The base station 110 has coverage defined based on a distance over which a signal may be transmitted. The base station 110 may be referred to as an 'access point (AP)', an 'eNodeB (eNB)', a '5th generation node (5G node)', a 'next generation nodeB (gNB)', a 'wireless point', a 'transmission/reception point (TRP)', or another term having an equivalent technical meaning, in addition to a base station.

The terminal 120 is a device used by a user and performs communication with the base station 110 through a wireless channel. A link from the base station 110 to the terminal 120 is referred to as a downlink (DL), and a link from the terminal 120 to the base station 110 is referred to as an uplink (UL). In addition, although not illustrated in FIG. 1A, the terminal 120 and another terminal may perform communication with each other through a wireless channel. In this case, a link between the terminal 120 and the another terminal (device-to-device link (D2D)) is referred to as a sidelink, and the

sidelink may be used interchangeably with a PC5 interface. In some other embodiments, the terminal 120 may be operated without user involvement. According to an embodiment, the terminal 120, which is a device performing machine type communication (MTC), may not be carried by a user. In addition, according to an embodiment, the terminal 120 may be a narrowband (NB)-internet of things (IoT) device.

The terminal 120 may be referred to as 'user equipment (UE)', 'customer premises equipment (CPE)', a 'mobile station', a 'subscriber station', a 'remote terminal', a 'wireless terminal', an 'electronic device', a 'user device', or another term having an equivalent technical meaning, in addition to a terminal.

The base station 110 may perform beamforming with the terminal 120. The base station 110 and the terminal 120 may transmit and receive wireless signals in a relatively low frequency band (e.g., frequency range 1 (FR 1) of NR). In addition, the base station 110 and the terminal 120 may transmit and receive wireless signals in a relatively high frequency band (e.g., FR 2 (or FR 2-1, FR 2-2, FR 2-3) or FR 3 of NR), or a millimeter wave (mmWave) band (e.g., 28GHz, 30GHz, 38GHz, 60GHz). In order to improve channel gain, the base station 110 and the terminal 120 may perform beamforming. Herein, the beamforming may include transmission beamforming and reception beamforming. The base station 110 and the terminal 120 may provide directivity to a transmission signal or a reception signal. To this end, the base station 110 and the terminal 120 may select serving beams through a beam search or beam management procedure. After the serving beams are selected, subsequent communication may be performed through a resource in a QCL relationship with a resource that transmitted the serving beams.

The terminal 120 may be configured with cells of the base station 110 and carrier aggregation (CA). The CA technology is a technology for increasing frequency usage efficiency of the terminal 120 and the base station 110 by connecting the terminal to a homogeneous wireless communication cell group having a common radio resource control entity and simultaneously using frequency resources on a component carrier (CC) of each cell located in different frequency bands for signal transmission and reception. Cells configured for the CA may include one primary cell (PCell) and one or more secondary cells (SCells).

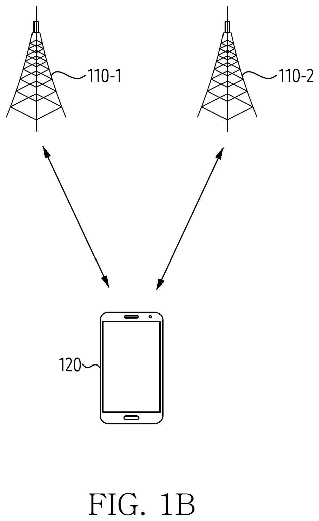

Referring to FIG. 1B, the terminal 120 may be configured in dual connectivity (DC) using a first base station 110-1 and a second base station 110. The DC technology is a technology for increasing frequency usage efficiency by connecting the terminal simultaneously to two independent heterogeneous or homogeneous wireless communication cell groups having separate radio resource control entities and using frequency resources on a component carrier of a cell in each cell group located in different frequency bands for signal transmission and reception. The DC technology is a technology for the terminal 120 to be connected to two different radio resource entities (e.g., the first base station 110-1 and the second base station 110-2), and to use radio resources allocated by each radio resource entity. In MR-DC, a UE (e.g., the terminal 120) in a radio resource control (RRC) connected state (i.e., RRC_ CONNCETED) may be configured to use radio resources provided by two independent schedulers. Each scheduler may be located in an NG-RAN node (e.g., the first base station 110-1 or the second base station 110-2). Herein, one node is a master node (MN) and another node is a secondary node (SN). The MN and the SN may be connected through a network interface, and the MN may be connected to a core network. The SN may be connected or may not be connected to the core network.

The MN may provide a master cell group (MCG). The MN may be referred to as an M-NODE or an M-NG-RAN node in addition to the MN. The MCG may include one or more cells. The MCG may include a primary cell (PCell). The MCG may include a plurality of aggregated cells. The MCG may include the PCell and one or more SCells. The SN may provide a secondary cell group (SCG). The SN may be referred to as an S-NODE or an S-NG-RAN node in addition to the SN. The SCG may include one or more cells. The SCG may include a plurality of aggregated cells. Like the MCG, the SCG may include a PCell and/or an SCell. A cell functioning as a PCell within the SCG may be referred to as a primary secondary cell (PSCell). A secondary cell group may include the PSCell and one or more SCells. Hereinafter, a special cell (SpCell) may be used as a term including the PCell and the PSCell. The SpCell means a primary cell of the MCG or the SCG. In other words, the SpCell of the MCG refers to the PCell, and the SpCell of the SCG refers to the SCell.

Possible types of DC may be defined as follows.

1) EN-DC: Dual connectivity in which an eNB is connected to an evolved packet core (EPC), and the terminal is connected to an eNB acting as the MN and a gNB acting as the SN. Herein, the gNB may be referred to as an en-gNB, and the en-gNB may be connected or may not be connected to the EPC.
2) NGEN-DC: Dual connectivity in which an eNB is connected to a 5G core (5GC), and the terminal is connected to an eNB acting as the MN and a gNB acting as the SN. Herein, the eNB may be referred to as an ng-eNB.
3) NE-DC: Dual connectivity in which a gNB is connected to the 5GC, and the terminal is connected to a gNB acting as the MN and an eNB acting as the SN. Herein, the eNB may be referred to as an ng-eNB.
4) NR-DC: Dual connectivity in which gNBs are connected to the 5GC, and the terminal is connected to a gNB acting as the MN and a gNB acting as the SN. NR-DC may be used even in a case that the UE performs roles of both the MN and the SN and configures both the MCG and the SCG by being connected to a single gNB.

The terminal 120 may support multi-radio (MR)-DC. The terminal 120 may be connected to the first base station

110-1 and the second base station 110-2. The first base station 110-1 is the MN and the second base station 110-2 is the SN, and may be connected to the terminal. Together with carrier aggregation (CA) provided by each base station, the DC technology may provide a higher data rate. The first base station 110-1 and the second base station 110-2, as the MN and the SN, respectively, may transmit downlink traffic to the terminal 120 or receive uplink traffic from the terminal 120.

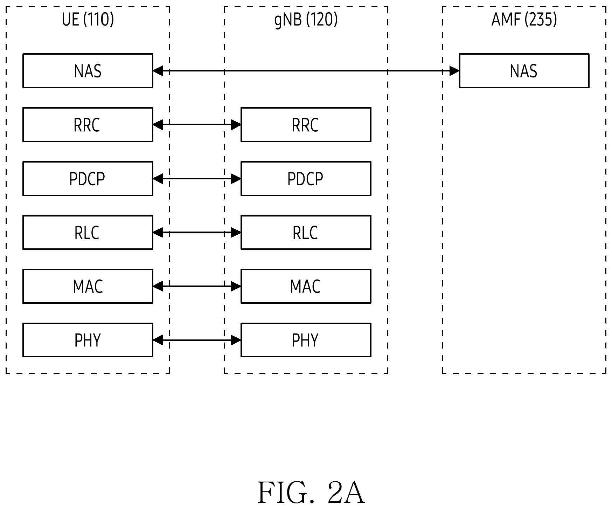

FIG. 2A illustrates examples of a control plane (C-plane).

Referring to FIG. 2A, in the C-plane, a UE 110 and an AMF 235 may perform non-access stratum (NAS) signaling. In the C-plane, the UE 110 and a gNB 120 may perform communication according to protocols specified in an RRC layer, a PDCP layer, an RLC layer, a MAC layer, and a PHY layer, respectively.

Main functions of the RRC layer may include at least some of the following functions.

- Broadcasting of system information related to an access stratum (AS) and the NAS
- Paging initiated by a 5G core (5GC) or a Next Generation-Radio Access Network (NG-RAN)
- Establishment, maintenance, and release of an RRC connection between the UE and the NG-RAN, including the following, and more specifically, including control for the RLC, the MAC, and the PHY:
  - Addition, modification, and release of Carrier Aggregation
  - Addition, modification, and release of dual connectivity between NR or E-UTRA and NR.
- Security function including key management;
- Establishment, configuration, maintenance, and release of a Signaling Radio Bearer (SRB) and a Data Radio Bearer (DRB)
- Mobility function including the following:
  - Handover and context transfer;
  - UE cell selection and reselection and control of the cell selection and the reselection;
  - Inter-RAT mobility.
- Quality of Service (QoS) management function;
- UE measurement reporting and control of the reporting;
- Detection and recovery of a radio link failure
- Transfer of a message to/from the NAS from/to the UE.

Main functions of the PDCP layer may include at least some of the following functions.

- Header compression and decompression function (Header compression and decompression: ROHC only)
- User data transfer function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU discard function (Timer-based SDU discard in uplink.)

Main functions of the RLC layer may include at least some of the following functions.

- Data transfer function (Transfer of upper layer PDUs)
- Sequential delivery function (In-sequence delivery of upper layer PDUs)
- Non-sequential delivery function (Out-of-sequence delivery of upper layer PDUs)
- ARQ function (Error Correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU discard function (RLC SDU discard)
- RLC re-establishment function (RLC re-establishment)

The MAC layer may be connected to a plurality of RLC layer devices configured in one terminal, and main functions of the MAC may include at least some of the following functions.

- Mapping function between logical channels and transport channels (Mapping between logical channels and transport channels)
- Multiplexing and demultiplexing function of MAC SDUs (Multiplexing/demultiplexing of MAC SDUs)
- Scheduling information reporting function (Scheduling information reporting)
- Error correction through HARQ function (Error correction through HARQ)
- Priority handling function between logical channels of one UE (Priority handling between logical channels of one UE)
- Priority handling function between terminals (Priority handling between UEs by means of dynamic scheduling)
- MBMS service identification function (MBMS service identification)
- Transport format selection function (Transport format selection)
- Padding function (Padding)

The physical layer may perform an operation of channel coding and modulating upper-layer data, and generating OFDM symbols from it, and transmitting them through a wireless channel, or demodulating and channel decoding OFDM symbols received through a wireless channel and delivering it to an upper layer.

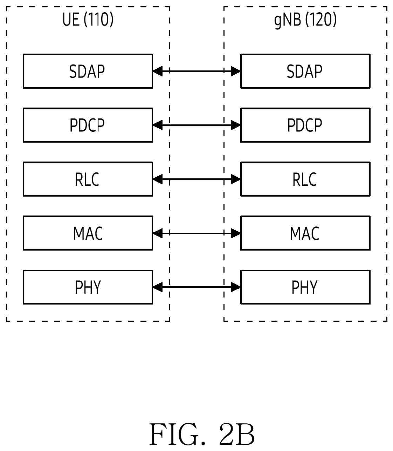

FIG. 2B illustrates examples of a user plane (U-plane).

Referring to FIG. 2B, in the U-plane, the UE 110 and the gNB 120 may perform communication according to protocols specified in an SDAP layer, the PDCP layer, the RLC layer, the MAC layer, and the PHY layer, respectively. For the PDCP layer, the RLC layer, the MAC layer, and the PHY layer, except for the SDAP layer, the description of FIG. 2A may be referred to.

The SDAP layer may provide a QoS flow of the 5GC. A single protocol entity of the SDAP may be configured for each individual PDU session, and functions of the SDAP layer may include at least some of the following function.

- Mapping between the QoS flow and the data radio bearer;
- Indication of a QoS flow identifier (QFI) in both DL and UL packets.

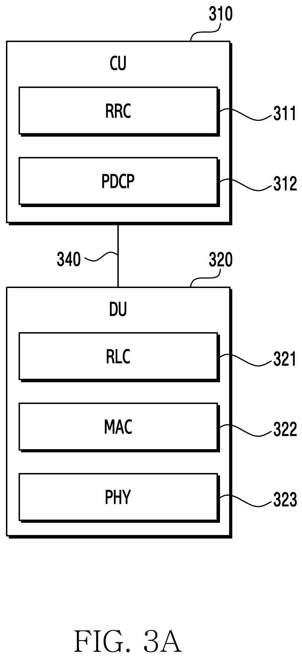

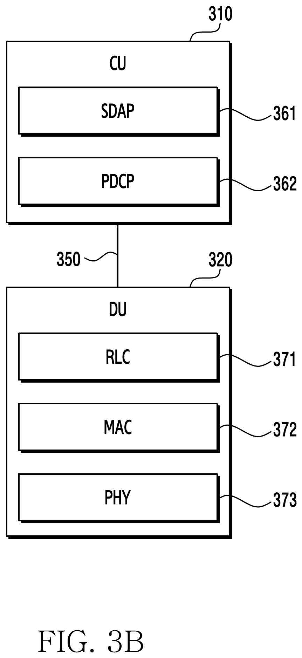

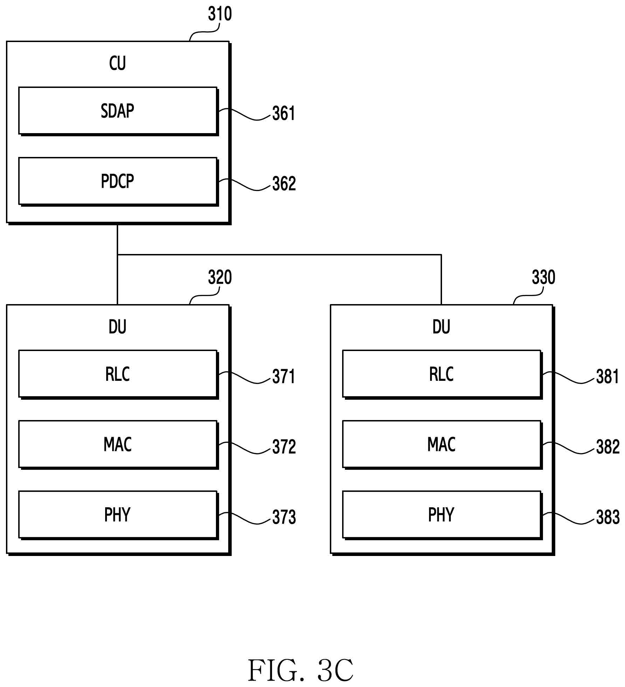

FIGS. 3A, 3B, and 3C illustrate examples of function split according to a communication protocol. A base station (e.g., the base station 110) may operate as an eNB or a gNB according to a radio access technology (RAT) that it provides. For example, the base station may be referred to as an NG-RAN node. The base station may be implemented in a distributed deployment according to a centralized unit (CU) configured to perform functions of upper layers of an access network (e.g., packet data convergence protocol (PDCP) and radio resource control (RRC)) and a distributed unit (DU) configured to perform functions of lower layers.

Referring to FIG. 3A, in a control plane, a CU 310 may be connected to one or more DUs (e.g., a DU 320) and may be in charge of a function of a layer higher than that of the DU. For example, the CU 310 may be in charge of functions of an RRC layer 311 and a PDCP layer 312. The CU 310 may transmit a message or receive a message through an F1 interface 340 with the DU 320. In the control plane, the DU 320 may be in charge of functions of an RLC layer 321, a MAC layer 322, and a PHY layer 323. For a description of functions of the RRC layer 311 of the CU 310, a description of the RRC layer in FIG. 2A may be referred to. For a description of functions of the PDCP layer 312 of the CU 310, a description of the PDCP layer in FIG. 2A may be referred to. For a description of functions of the RLC layer 321 of the DU 320, a description of the RLC layer in FIG. 2A may be referred to. For a description of functions of the MAC layer 322 of the DU 320, a description of the MAC layer in FIG. 2A may be referred to. For a description of functions of the PHY layer 323 of the DU 320, a description of the PHY layer in FIG. 2A may be referred to. The DU 320 may, through the PHY layer 323, perform an operation of channel coding and modulating upper-layer data, and generating OFDM symbols from it and transmitting them through a wireless channel, or demodulating and channel decoding OFDM symbols received through a wireless channel and delivering it to an upper layer.

Referring to FIG. 3B, in a user plane, the CU 310 may be connected to one or more DUs (e.g., the DU 320) and may be in charge of a function of a layer higher than that of the DU. For example, the CU 310 may be in charge of functions of an SDAP layer 361 and a PDCP layer 362. The CU 310 may transmit a message or receive a message through an F1 interface 350 (e.g., F1-U) with the DU 320. The CU 310 may be referred to as a node hosting a PDCP entity for the PDCP layer 362 in terms of performing functions for the PDCP layer 362. The DU 320, as a node interacting with a node hosting the PDCP entity for flow control, may be referred to as the corresponding node. In the user plane, the DU 320 may be in charge of functions of an RLC layer 371, a MAC layer 372, and a PHY layer 373. For a description of functions of the SDAP layer 361 of the CU 310, a description of the SDAP layer of FIG. 2B may be referred to. For a description of functions of the PDCP layer 362 of the CU 310, a description of the PDCP layer of FIG. 2B may be referred to. For a description of functions of the RLC layer 321 of the DU 320, a description of the RLC layer of FIG. 2B may be referred to. For a description of functions of the MAC layer 322 of the DU 320, a description of the MAC layer of FIG. 2B may be referred to. For a description

of functions of the PHY layer 323 of the DU 320, a description of the PHY layer of FIG. 2B may be referred to.

Referring to FIG. 3C, an example of a protocol layer of the user plane in dual connectivity is illustrated. Different DUs (e.g., the DU 320 and a DU 330) may be connected to one CU 310. Separate from the DU 320, the DU 330 may include an RLC entity for an independent RLC layer 381 and a MAC entity for a MAC layer 382. The DU 330 may provide an access network distinguished from an access network of the DU 320 to a UE (e.g., the terminal 120). In terms of the UE, two separate MAC entities (e.g., a first MAC entity for the MAC layer 372 and a second MAC entity for the MAC layer 382) may indicate dual connectivity for the UE.

In FIGS. 3A, 3B, and 3C, a DU (e.g., the DU 320) is illustrated as being in charge of a physical layer (e.g., the physical layer 323 and the physical layer 373), but embodiments of the present disclosure are not limited thereto. According to an implementation example, the DU 320 may perform some functions of the physical layer (high PHY), and an RU connected to the DU 320 may be in charge of remaining functions of the physical layer (low PHY). In addition, as an example, a digital unit (DU) may be included in the distributed unit (DU) 320 according to a distributed deployment implementation of a base station. As a non-limiting example, the digital unit (DU) may refer to an entity including a CU and a distributed unit (DU) in a structure in which a CU, a distributed unit (DU), and an RU are disposed in sequence.

In the present disclosure, in describing network nodes transmitting or receiving a data packet, a distributed deployment may be used. As a component for the distributed deployment, an upper network node and a lower network node may be used. The upper network node may be configured to perform functions of upper layers (e.g., RRC, PDCP, and SDAP) among communication protocol layers. For example, the upper network node may be a CU (e.g., the CU 310). The lower network node may be configured to perform functions of lower layers (e.g., RLC and MAC) among the communication protocol layers. For example, the lower network node may be a DU (e.g., the DU 320). Hereinafter, the CU 310 is described as an example of the upper network node and the DU 320 is described as an example of the lower network node, but as a non-limiting example, other types of network nodes may be used according to another function split option.

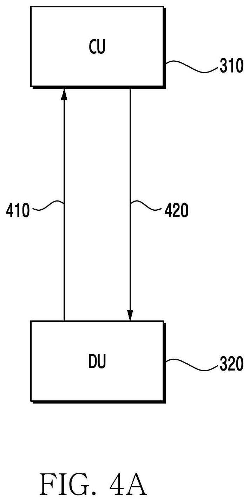

FIG. 4A illustrates an example of signaling between a central unit (CU) (e.g., a CU 310) and a distributed unit (DU) (e.g., a DU 320). In FIG. 4A, in a user plane (U-plane), examples of messages on an F1 interface 350 (e.g., F1-U) between the CU 310 and the DU 320 are described. The same reference numerals may indicate the same descriptions.

Referring to FIG. 4A, the CU 310 may transmit a status message 410 to the DU 320.

1. Transmission of Status Message

The CU 310 may transmit the status message 410 to the DU 320 through the F1 interface 350 (e.g., F1-U). According to an embodiment, the status message 410 may be used to provide a downlink data delivery status (DDDS) to the CU 310. A procedure for transmitting the status message 410 may allow the CU 310 to control a downlink user data flow of each data radio bearer (DRB) by providing feedback from the DU 320 to the CU 310. The procedure for transmitting the status message 410 may be used to provide feedback from the DU 320 to the CU 310 to allow the CU 310 to control successful delivery of downlink control data. As a non-limiting example, the DU 320 may deliver uplink user data of an associated data radio bearer to the CU 310 through the status message 410. At this time, a data radio bearer of the uplink user data and a radio bearer of the status message 410 may be associated with the same protocol data unit (PDU).

The status message 410 may include various information. For example, in an RLC acknowledged mode (AM), the status message 410 may include the highest NR PDCP PDU sequence number successfully delivered in sequence to a UE among PDCP PDUs received from the CU 310. Herein, among the PDUs, a retransmitted NR PDCP PDU may be excluded. For example, the status message 410 may include information on a desired buffer size for the corresponding data radio bearer or a multicast/broadcast service radio bearer (MRB). The desired buffer size may be indicated in units of bytes. For example, the status message 410 may optionally include information on a desired data rate associated with a specific data radio bearer configured for the UE or the MRB. The desired data rate may be indicated in units of bytes. A value indicated in the units of bytes may indicate a transmission amount per unit time (e.g., 1 second). For example, the status message 410 may include information on an NR-U packet declared as "lost" and not yet reported to the CU 310 within the status message 410 (e.g., a downlink data delivery status (DDDS) frame of Table 1). For example, in a case that a retransmitted NR PDCP PDU is delivered, the status message 410 may include information on an NR PDCP PDU sequence number associated with the highest NR-U sequence number among retransmitted NR PDCP PDUs successfully delivered to the UE in order of NR-U sequence numbers. For example, in a case that a retransmitted NR PDCP PDU is transmitted to a lower layer, the status message 410 may include information on an NR PDCP PDU sequence number associated with the highest NR-U sequence number among retransmitted NR PDCP PDUs transmitted to the lower layer in order of NR-U sequence numbers. For example, the status message 410 may include information on the highest NR PDCP PDU sequence number transmitted to a lower layer among NR PDCP PDUs received from the CU 310. Herein, among the PDUs, a retransmitted NR PDCP PDU may be excluded. For example, in the RLC AM, the status message 410 may include information on an NR PDCP PDU sequence number successfully delivered out of sequence to the UE among NR PDCP PDUs received from the CU 310. Herein, among the PDUs, a retransmitted NR PDCP PDU may be excluded.

The status message 410 may be triggered based on an event. For example, if the DU 320 detects a successful

random access channel (RACH) access by the UE (e.g., the terminal 120) to the corresponding data radio bearer, the DU 320 may transmit the status message 410 to the CU 310. The CU 310 may start downlink data transmission before receiving the status message 410. For example, the status message 410 may have the following format referred to as a downlink data delivery status (DDDS) frame.

【Table 1】

| Bits | | | | | | | | Number of Octets |
|---|---|---|---|---|---|---|---|---|
| 7 | 6 | 5 | 4 | 3 | 2 | 1 | 0 | |
| PDU Type (=1) | | | | Highest Transmitted NR PDCP SN Ind | Highest Delivered NR PDCP SN Ind | Final Frame Ind. | Lost Packet Report | 1 |
| Spare | Feedback Delay Ind. | NR-U SN Ind. | Delivered NR PDCP SN Range Ind | Data rate Ind. | Retransmitted NR PDCP SN Ind | Delivered Retransmitted NR PDCP SN Ind | Cause Report | |
| Desired buffer size for the data radio bearer | | | | | | | | 4 |
| Desired Data Rate | | | | | | | | 0 or 4 |
| Number of lost NR-U Sequence Number ranges reported | | | | | | | | 0 or 1 |
| Start of lost NR-U Sequence Number range | | | | | | | | 0 or (6* Number of reported lost NR-U SN ranges) |
| End of lost NR-U Sequence Number range | | | | | | | | |
| Highest successfully delivered NR PDCP Sequence Number | | | | | | | | 0 or 3 |
| Highest transmitted NR PDCP Sequence Number | | | | | | | | 0 or 3 |

| | |
|---|---|
| Cause Value | 0 or 1 |
| Successfully delivered retransmitted NR PDCP Sequence Number | 0 or 3 |
| Retransmitted NR PDCP Sequence Number | 0 or 3 |
| Number of successfully delivered out of sequence PDCP Sequence Number range | 0 or 1 |
| Start of successfully delivered out of sequence PDCP Sequence Number range | 0 or (6* Number of successfully delivered out of sequence PDCP Sequence Number range) |
| End of successfully delivered out of sequence PDCP Sequence Number range | |
| NR-U Sequence Number of Polling Frame | 0 or 3 |
| Feedback Delay Result | 0 or 4 |
| Padding | 0-3 |

Referring to Table 1, when the status message 410 is a last downlink status report, the status message 410 may include a separate indicator (e.g., Final Frame Ind.). The CU 310, having received the indicator, may consider that no further UL or DL data transmission is expected between the DU 320 and the terminal 120. The status message 410 may include a detected indicator of a radio link outage or a radio link resume for the associated data radio bearer. For example, a specific value of a parameter (e.g., "Cause Value") may indicate a radio link outage (e.g., a value '1' of the parameter indicates a radio link outage) or a radio link resume (e.g., a value '2' of the parameter indicates a radio link resume). For example, through the value of the parameter, the radio link outage or the radio link resume may be indicated by both downlink and uplink, indicated for only downlink, or indicated for only uplink.

Referring to Table 1, 'Desired buffer size for the data radio bearer' may indicate a desired buffer size for an associated data radio bearer in units of bytes. 'Desired buffer size for the data radio bearer' has a 4-octet structure and may have a value from 0 to $2^{32}$-1. As an example, 'Desired Data Rate' indicates an amount of data desired to be received during a specific time (e.g., 1 second) in units of bytes. 'Desired Data Rate' has a 4-octet structure and may have a value from 0 to $2^{32}$-1.

The CU 310 may receive the status message 410 from the DU 320. The CU 310 may determine a desired buffer size (e.g., 'Desired buffer size for the data radio bearer') and a data rate (e.g., 'Desired Data Rate') as an amount of data to be transmitted from the CU 310. If a value of the desired buffer size is 0, the CU 310 may stop data transmission of the corresponding bearer. In a case that the value of the desired buffer size is greater than 0, the CU 310 may transmit data up to an amount of data indicated by the desired buffer size per bearer. For example, the data may include data to be retransmitted. In addition to the retransmitted data, the data may include new data starting from the last "highest successfully delivered NR PDCP Sequence Number" (e.g., 'Highest successfully delivered NR PDCP Sequence Number') for the RLC AM, or starting from the last "highest transmitted NR PDCP Sequence Number" (e.g., 'Highest transmitted NR PDCP Sequence Number') for an RLC UM. The value of the desired data rate indicates an amount of data desired to be received for approximately 1 second. Information on the desired buffer size and information on the desired data rate may be valid until a next status message is received.

2. Transmission of User Data

The DU 320 may transmit user data 420 to the CU 310. A purpose of a transmission procedure of the user data 420 is to provide NR-U specific sequence number information when transmitting the user data 420 carrying a DL NR PDCP PDU from the CU 310 to the DU 320. In downlink, an NR user plane protocol instance using the transmission procedure of the user data 420 may be connected to only a single radio bearer. The CU 310 may allocate consecutive NR-U sequence numbers to each transmitted NR-U packet. A new NR-U sequence number shall be allocated to a retransmitted NR PDCP

PDU. The CU 310 may inform the DU 320 whether the NR-U packet is a retransmission of an NR PDCP PDU. The CU 310 may also indicate the DU 320 to discard all NR PDCP PDUs including up to a defined DL discard NR PDCP PDU SN or to discard one or a plurality of downlink NR PDCP PDU blocks.

For example, the user data 420 may have the following format.

[Table 2]

| Bits | | | | | | | | Number of Octets |
|---|---|---|---|---|---|---|---|---|
| 7 | 6 | 5 | 4 | 3 | 2 | 1 | 0 | |
| PDU Type (=0) | | | | Spare | DL Discar d Blocks | DL Flush | Repor t pollin g | 1 |
| Spare | | | Requ est Outof Seq Repor t | Repor t Delive red | User data existe nce flag | Assist ance Info. Re-por t Pollin g Flag. | Retra nsmis sion flag | 1 |
| NR-U Sequence Number | | | | | | | | 3 |
| DL discard NR PDCP PDU SN | | | | | | | | 0 or 3 |
| DL discard Number of blocks | | | | | | | | 0 or 1 |
| DL discard NR PDCP PDU SN start (first block) | | | | | | | | 0 or 3 |
| Discarded Block size (first block) | | | | | | | | 0 or 1 |
| ... | | | | | | | | |
| DL discard NR PDCP PDU SN start (last block) | | | | | | | | 0 or 3 |
| Discarded Block size (last block) | | | | | | | | 0 or 1 |
| DL report NR PDCP PDU SN | | | | | | | | 0 or 3 |
| Padding | | | | | | | | 0-3 |

Referring to Table 2, as an example, 'NR-U Sequence Number' indicates an NR-U sequence number allocated by the CU 310. 'NR-U Sequence Number' has a 3-octet structure and may have a value from 0 to $2^{24}$-1. As an example, 'DL discard NR PDCP PDU SN' may indicate a corresponding SN in a case that PDUs up to the NR PDCP PDU SN are discarded. 'DL discard NR PDCP PDU SN' has a 3-octet structure and may have a value from 0 to $2^{18}$-1. As an example, 'DL discard Number of blocks' indicates downlink blocks being discarded. 'DL discard Number of blocks' has a 1-octet structure and may have a value from 1 to 244. As an example, 'DL discard NR PDCP PDU SN start' indicates a start SN in the corresponding block to be discarded, and 'Discarded Block size' indicates the number of PDCP PDUs to be discarded from the start SN.

In FIG. 4A, an NR PDCP PDU is described as an example of a downlink packet, but embodiments of the present disclosure are not limited thereto. On a W1 interface between an eNB-DU and an eNB-CU, PDCP PDUs may also be targets of application of embodiments of the present disclosure. In other words, downlink packets include PDCP PDUs in an LTE network, and the CU 310 and the DU 320 may correspond to an eNB-CU and an eNB-DU that configure an eNB, respectively. Hereinafter, the description of the F1 interface 350 (e.g., F1-U) may be equally applied to the W1 interface between the eNB-CU and the eNB-DU.

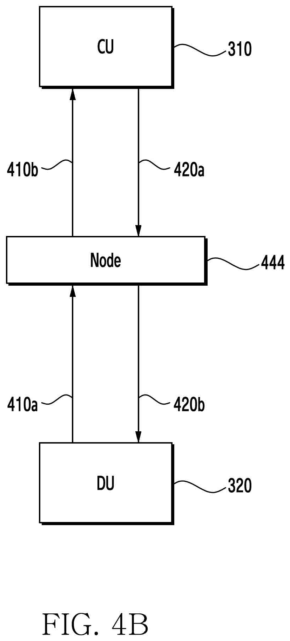

FIG. 4B illustrates an example of signaling between a CU (e.g., the CU 310) and a DU (e.g., the DU 320) via a routing node. The same reference numerals may indicate the same descriptions.

Referring to FIG. 4B, at least one routing node (e.g., a routing node 444) (which may be referred to as a router, a relay node, a node, and/or an equivalent technical term in addition to a routing node) may be disposed between the CU 310 and the DU 320. In terms of a communication protocol, the CU 310 and the DU 320 perform communication through an F1 interface, but data delivered from the CU 310 to the DU 320 may be provided to the DU 320 via the at least one routing node between the CU 310 and the DU 320. Similarly, data delivered from the DU 320 to the CU 310 may be provided to the DU 320 via the at least one routing node between the CU 310 and the DU 320. For example, the DU 320 may transmit the status message 410 to the CU 310 via the routing node 444. As an example, the DU 320 may transmit the status message 410 to the routing node 444 through a first uplink path 410a. The routing node 444 may transmit the status message 410 to the CU 310 through a second uplink path 410b. The DU 320 may transmit the user data 420 to the DU 320 via the routing node 444. As an example, the CU 310 may transmit the user data 420 to the routing node 444 through a first downlink path 420a. The routing node 444 may transmit the user data 420 to the DU 320 through a second downlink path 420b.

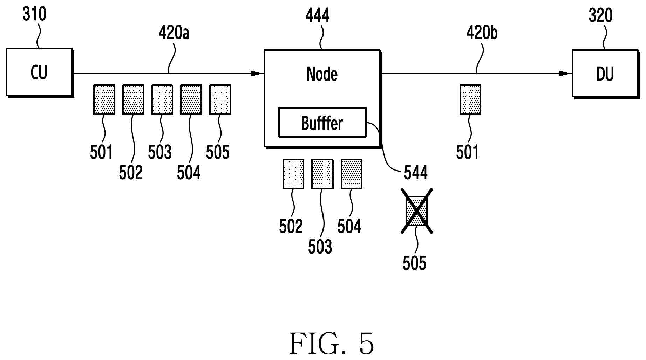

The existence of the routing node 444 may cause a difference between a desired data rate at the DU 320 and a

data rate actually provided from the CU 310. For example, the DU 320 may request a downlink packet corresponding to a data rate of approximately 3 Gbps through the status message 410. The CU 310 may receive the status message 410. The CU 310 may determine an amount of downlink packets to be allocated per unit time from the status message 410. The CU 310 may determine a data rate. For example, the CU 310 may determine a data rate of approximately 3 Gbps. The CU 310 may transmit downlink packets to the DU 320 according to the determined data rate. The CU 310 may transmit the downlink packets to the routing node 444 through the first downlink path 420a. The routing node 444 may determine to transmit the downlink packets to the DU 320. However, performance of the second downlink path 420b between the routing node 444 and the DU 320 may be different from performance of the first downlink path 420a between the CU 310 and the routing node 444. For example, while a cable of the first downlink path 420a between the CU 310 and the routing node 444 supports up to approximately 10 Gbps, a cable of the second downlink path 420b between the routing node 444 and the DU 320 may support only up to 1 Gbps. Accordingly, the cable performance of the second downlink path 420b between the routing node 444 and the DU 320 may have difficulty guaranteeing a speed of approximately 3 Gbps between the CU 310 and the routing node 444. Due to a difference in performance between paths (e.g., a difference in performance between cables), a mismatch in speed may occur. Since the routing node 444 provides downlink packets to the DU 320 only at a speed of approximately 1 Gbps, the DU 320 may fail to receive packets corresponding to the remaining approximately 2 Gbps. Even when downlink packets stored through a buffer in the routing node 444 are provided to the DU 320, if a capacity of the buffer is not sufficient to compensate for the difference in speed, packet loss may occur within the routing node 444. In other words, a mismatch between a speed performance of the first downlink path 420a and a speed performance of the second downlink path 420b may cause packet loss. Such lost packets may have difficulty being sufficiently recovered even through a retransmission algorithm (e.g., automatic repeat request (ARQ)). Due to the lost packets, a UE (e.g., the terminal 120) may experience service disconnection. A specific example of packet loss is described through FIG. 5.

FIG. 5 illustrates a flow of downlink packet processing. The same reference numerals may indicate the same descriptions.

Referring to FIG. 5, a CU 310 may transmit downlink packets corresponding to user data 420 to a routing node 444 through a first downlink path 420a. The downlink packets may include a first downlink packet 501, a second downlink packet 502, a third downlink packet 503, a fourth downlink packet 504, and a fifth downlink packet 505. For example, the first downlink path 420a may process 10 downlink packets per unit time. The CU 310 may transmit up to a total of 10 downlink packets during the unit time. Accordingly, within the unit time, the CU 310 may transmit the first downlink packet 501, the second downlink packet 502, the third downlink packet 503, the fourth downlink packet 504, and the fifth downlink packet 505 to the routing node 444.

A second downlink path 420b may process one downlink packet per unit time. The routing node 444 may transmit only one downlink packet during the unit time. Accordingly, the routing node 444 may transmit the first downlink packet 501 to a DU 320 within the unit time. The routing node 444 may include a buffer 544. For example, the buffer 544 may store three downlink packets. The routing node 444 may store the second downlink packet 502, the third downlink packet 503, and the fourth downlink packet 504. However, the routing node 444 may have difficulty storing the fifth downlink packet 505 due to a capacity limitation of the buffer 544. As the routing node 444 fails to process the fifth downlink packet 505, the fifth downlink packet 505 may be discarded or lost. If packet loss actually occurs, a recovery operation may be performed through a packet retransmission operation, but as buffer usage at a network side is higher, it may be more difficult to recover a packet such as the fifth downlink packet 505.

In a case that downlink packets are allocated in bursts, an amount of data in a downlink path may increase rapidly, thereby further increasing a probability of packet loss in a backhaul section between the CU 310 and the DU 320. In order to resolve and/or alleviate the above-described problem, in the present disclosure, a technique for detecting expected packet loss and adaptively controlling downlink traffic according to a degree of the detected packet loss is described. Specifically, the DU 320 may control downlink traffic from the CU 310 through a parameter related to a requested amount of data (e.g., information on a desired buffer size ('Desired buffer size for the data radio bearer') and information on a desired data rate ('Desired Data Rate')) among parameters included in a status message 410 (e.g., the downlink data delivery status (DDDS) frame of Table 1).

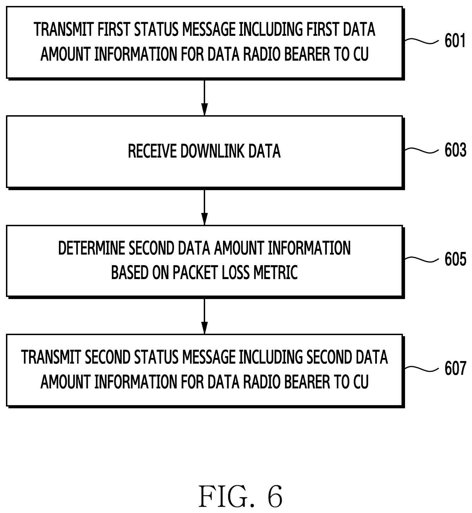

FIG. 6 illustrates an operation flow of an electronic device (e.g., a DU 320) for downlink traffic control.

Referring to FIG. 6, in operation 601, the electronic device (e.g., the DU 320) may transmit a first status message (e.g., the status message 410, the DDDS frame of Table 1) including first data amount information for a data radio bearer to a CU 310. For example, the first data amount information may indicate a desired buffer size for the data radio bearer. As an example, the first data amount information may correspond to 'Desired buffer size for the data radio bearer' of Table 1. For another example, the first data amount information may indicate an amount of data desired to be received within a specified time (e.g., 1 second). As an example, the first data amount information may correspond to 'Desired Data Rate' of Table 1.

In operation 603, the electronic device (e.g., the DU 320) may receive downlink data (e.g., user data 420). The electronic device may obtain downlink packets (e.g., PDCP PDUs) corresponding to downlink data received from the CU 310. The electronic device may determine a packet loss metric between the CU 310 and the DU 320 from the downlink packets. For example, the electronic device may determine a packet loss rate as the packet loss metric. The electronic

device may determine the packet loss rate based on a sequence number for each packet of the downlink packets. Specifically, the electronic device may check a sequence number of each received downlink packet. By obtaining the sequence numbers, the electronic device may identify the number of at least one lost packet. The electronic device may determine the packet loss rate according to the total number of transmitted packets and the number of the at least one lost packet. For example, the electronic device may determine the number of lost packets as the packet loss metric. The electronic device may determine the number of lost packets based on a sequence number for each packet of the downlink packets. Specifically, the electronic device may check a sequence number of each received downlink packet. By obtaining the sequence numbers, the electronic device may identify at least one lost packet. For example, the electronic device may determine a capacity size of delayed packets (or lost packets) as the packet loss metric. The electronic device may determine the capacity size of the delayed packets through a difference between an amount of data requested through the first status message in the operation 601 and an amount of data of the actually received downlink data. For example, the electronic device may request approximately 275 Megabytes of data from the CU 310 through the first status message. In a case that the electronic device receives approximately 125 Megabytes of data per unit time (e.g., 1 second), it may determine that a delay of approximately 150 Megabytes of data has occurred.

In operation 605, the electronic device (e.g., the DU 320) may determine second data amount information based on the packet loss metric. A higher packet loss metric may indicate that relatively more packets are lost, and the higher packet loss metric may indicate that relatively fewer packets are lost. As described in the operation 603, the packet loss metric may be determined through at least one of various methods (e.g., a packet loss rate, the number of lost packets, and/or a capacity of a delayed packet (or a lost packet capacity)).

The electronic device may compare the packet loss metric with at least one threshold. Traffic control according to the threshold may be performed in various ways. For example, the traffic control may be performed in three stages of 'Up', 'Maintain', and 'Down'. The first data amount information indicated through the first status message in the operation 601 may have a first value. The electronic device may determine a second value as the second data amount information. In a case that the packet loss metric is less than a first threshold, the electronic device may determine the second value being greater than the first value. Since the number of lost packets is small, the electronic device may request transmission of a larger amount of downlink data from the CU 310 than the amount of data requested in the first data amount information. In a case that the packet loss metric is greater than or equal to the first threshold and less than a second threshold, the electronic device may determine the second value being equal to the first value. Since the number of lost packets is within a certain range, the electronic device may request the same amount of data from the CU 310 to maintain a current data rate. In a case that the packet loss metric is greater than or equal to the second threshold, the electronic device may determine the second value being smaller than the first value as the second data amount information. Since the number of lost packets is large, the electronic device may request transmission of a smaller amount of downlink data from the CU 310 than the amount of data requested in the first data amount information. For another example, the traffic control may be configured with two stages of 'Up' and 'Down'. The first data amount information indicated through the first status message in the operation 601 may have a first value. The electronic device may determine a second value as the second data amount information. In a case that the packet loss metric is less than a threshold, the electronic device may determine the second value being greater than the first value. In a case that the packet loss metric is greater than or equal to the threshold, the electronic device may determine the second value being smaller than the first value.

By determining the second data amount information, the electronic device may control a traffic rate of downlink data from the CU 310. A unit for adjusting the second data amount information (hereinafter, a control unit) may be performed in units of an absolute capacity of packets (e.g., xx bytes) or a ratio (e.g., yy%). For example, in a case of reducing the data amount due to a packet loss metric greater than or equal to the threshold, the electronic device may determine, as a second value, a value reduced by approximately 5% from the first value of the first data amount information. For another example, in a case of increasing the data amount due to a packet loss metric less than the threshold, the electronic device may determine, as a second value, a value increased by approximately 100 Megabytes from the first value of the first data amount information. According to an embodiment, the control unit may be fixedly set. According to a predefined value, the electronic device may increase or decrease an amount of data to be requested from the CU 310. According to another embodiment, the control unit may be set according to a previous control type. In a case that the number of requested packets is gradually increased, the control unit may gradually become larger. As an example, in a case that the packet loss metric continues to be lower than the threshold and the desired buffer size is continuously increased, a control unit for increasing the desired buffer size may gradually increase. When controlling first traffic, the electronic device may determine a data amount (e.g., a second data amount) increased by approximately 1% from a previous data amount. When controlling second traffic, the electronic device may determine a data amount (e.g., a third data amount) increased by approximately 3% from the previous data amount (e.g., the second data amount). When controlling third traffic, the electronic device may determine a data amount (e.g., a fourth data amount) increased by approximately 10% from the previous data amount (e.g., the third data amount).

A type of the second data amount information may correspond to a type of the first data amount information. For example, the second data amount information may indicate a desired buffer size for the data radio bearer. As an example,

the second data amount information may correspond to 'Desired buffer size for the data radio bearer' of Table 1. For another example, the second data amount information may indicate an amount of data desired to be received within a specified time (e.g., 1 second). As an example, the second data amount information may correspond to 'Desired Data Rate' of Table 1. As a non-limiting example, even when the type of the second data amount information is different from the type of the first data amount information, if the type of the second data amount information may be provided to the CU 310 for a purpose of controlling the traffic rate, the second data amount information using the type may be understood as an embodiment of the present disclosure. For example, the first data amount information may indicate a desired buffer size, and the second data amount information may indicate a desired data rate.

In operation 607, the electronic device (e.g., the DU 320) may transmit a second status message (e.g., the status message 410, the DDDS frame of Table 1) including the second data amount information for the data radio bearer to the CU 310. The electronic device may adjust a data amount of downlink packets for the same data radio bearer through the second data amount information.

As described through FIG. 6, if a packet loss metric between the DU 320 and the CU 310 is higher than a certain level (e.g., a threshold), the DU 320 lowers a packet transmission amount through a status message (e.g., the DDDS frame), and if the loss rate between the CU 310 and the DU 320 is lower than the certain level, the DU 320 lowers the packet transmission amount through the status message (e.g., the DDDS frame), whereby the traffic rate between the CU 310 and the DU 320 may be adaptively adjusted. In a case that at least one node (e.g., a routing node 444) is located between the CU 310 and the DU 320, a difference between a data capacity between the DU 320 and the routing node 444 and a data capacity between the CU 310 and the routing node 444 may cause a mismatch in speed. The data capacity may indicate an available data rate. For example, a data rate between the DU 320 and the routing node 444 may be lower than an available data rate between the CU 310 and the routing node 444. Accordingly, in order to prevent packet loss due to the mismatch in speed, the DU 320 may control a data rate or a data amount of downlink traffic from the CU 310.

As an element for determining a packet loss metric, a sequence number of a packet may be used. In order to identify lost packets, the DU 320 may check a sequence number of each packet. According to an embodiment, the DU 320 may determine the packet loss metric by checking an NR-U sequence number of a frame (e.g., the format of Table 2) of each received packet. According to another embodiment, the DU 320 may determine the packet loss metric by checking a sequence number of a GTP-U header of each packet. For example, the GTP-U header may have the following format.

[Table 3]

| | Bits | | | | | | | |
|---|---|---|---|---|---|---|---|---|
| Octets | 8 | 7 | 6 | 5 | 4 | 3 | 2 | 1 |
| 1 | Version | | | PT | (*) | E | S | PN |
| 2 | Message Type | | | | | | | |
| 3 | Length (1st Octet) | | | | | | | |
| 4 | Length (2nd Octet) | | | | | | | |
| 5 | Tunnel Endpoint Identifier (1st Octet) | | | | | | | |
| 6 | Tunnel Endpoint Identifier (2nd Octet) | | | | | | | |
| 7 | Tunnel Endpoint Identifier (3rd Octet) | | | | | | | |
| 8 | Tunnel Endpoint Identifier (4th Octet) | | | | | | | |
| 9 | Sequence Number (1st Octet)[1) 4] | | | | | | | |
| 10 | Sequence Number (2nd Octet)[1) 4)] | | | | | | | |
| 11 | N-PDU Number[2) 4)] | | | | | | | |
| 12 | Next Extension Header Type[3) 4)] | | | | | | | |
| (*) This bit is a spare bit. It shall be sent as '0'. The receiver shall not evaluate this bit.<br>1) This field shall only be evaluated when indicated by the S flag set to 1.<br>2) This field shall only be evaluated when indicated by the PN flag set to 1.<br>3) This field shall only be evaluated when indicated by the E flag set to 1.<br>4) This field shall be present if and only if any one or more of the S, PN, and E | | | | | | | | |

As a non-limiting example, an N-PDU number field and/or a Next Extension Header Type field may be omitted within the GTP-U header.

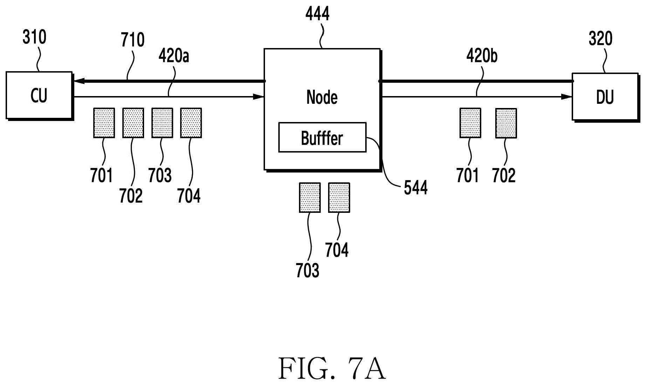

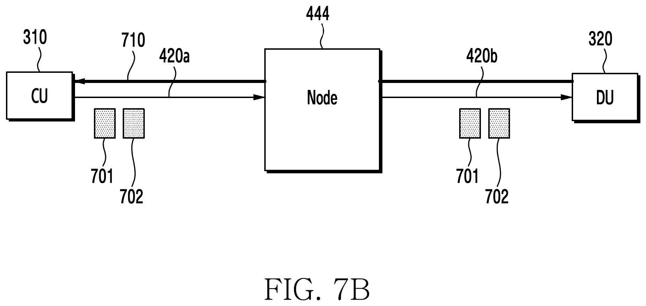

FIGS. 7A and 7B illustrate flows of downlink packet processing according to downlink traffic control. The same reference numerals may indicate the same descriptions. In FIGS. 7A and 7B, a situation in which traffic control by a DU 320 is performed after the packet loss of FIG. 5 is described.

Referring to FIG. 7A, the DU 320 may transmit a status message 710 (e.g., the status message 410, the DDDS frame) including data amount information adjusted through traffic control to a CU 310. The DU 320 may transmit the status message 710 to the CU 310 via a routing node 444. For example, the status message 710 may include a parameter indicating an amount of data smaller than an amount of data previously provided to the CU 310. As an example, the status message 710 may include information indicating a desired data buffer size ('Desired buffer size for the data radio bearer') smaller than a desired data buffer size that had been provided to the CU 310. As an example, the status message 710 may include information indicating a desired data rate ('Desired Data Rate') lower than a desired data rate that had been provided to the CU 310. According to an embodiment, the DU 320 may determine the data amount information to be included in the status message 710 based on a capacity of a buffer 544 of the routing node 444 and a transmission capacity of a second downlink path 420b. The DU 320 may determine an amount of data to be transmitted from the CU 310 by using not only a data rate in the second downlink path 420b but also the capacity of the buffer 544. The DU 320 may determine an amount of data to be transmitted from the CU 310 through the second downlink path 420b and the buffer 544 such that downlink packets are not lost. For example, the DU 320 may determine the data amount information indicating four downlink packets during a unit time. As a non-limiting example, since a risk of packet loss increases in a case that a plurality of traffics continuously occur, the DU 320 may set a threshold for traffic control (e.g., a first threshold, a second threshold, a threshold for comparison with a packet loss metric) based on a margin of an allowable limit.

The CU 310 may adjust an amount of downlink data to be transmitted, in response to the status message 710. The CU 310 may transmit downlink packets corresponding to user data 420 to the routing node 444 through a first downlink path 420a. The downlink packets may include a first downlink packet 701, a second downlink packet 702, a third downlink packet 703, and a fourth downlink packet 704. For example, the first downlink path 420a may process 10 downlink packets per unit time. The CU 310 may transmit up to a total of 10 downlink packets during the unit time. Accordingly, within the unit time, the CU 310 may transmit the first downlink packet 701, the second downlink packet 702, the third downlink packet 703, and the fourth downlink packet 704 to the routing node 444. The second downlink path 420b may process two downlink packets per unit time. The routing node 444 may transmit only two downlink packets during the unit time. Accordingly, the routing node 444 may transmit the first downlink packet 701 and the second downlink packet 702 to the DU 320 within the unit time. The routing node 444 may include the buffer 544. For example, the capacity of the buffer 544 may be larger than a size of two downlink packets. The buffer 544 may store two downlink packets. The routing node 444 may store the third downlink packet 703 and the fourth downlink packet 704.

Referring to FIG. 7B, the DU 320 may transmit a status message 710 (e.g., the status message 410, the DDDS frame) including data amount information adjusted through traffic control to the CU 310. The DU 320 may transmit the status message 710 to the CU 310 via the routing node 444. For example, the status message 710 may include a parameter indicating an amount of data smaller than an amount of data previously provided to the CU 310. As an example, the status message 710 may include information indicating a desired data buffer size ('Desired buffer size for the data radio bearer') smaller than a desired data buffer size that had been provided to the CU 310. As an example, the status message 710 may include information indicating a desired data rate ('Desired Data Rate') lower than a desired data rate that had been provided to the CU 310. According to an embodiment, the DU 320 may determine the data amount information to be included in the status message 710 based on a transmission capacity of the second downlink path 420b. The capacity of the buffer 544 may not be sufficient, or it may not be easy to identify a margin of the buffer 544. The DU 320 may determine an amount of data to be transmitted from the CU 310 according to a data rate in the second downlink path 420b. The DU 320 may determine an amount of data to be transmitted from the CU 310 through a transmission capacity limit (e.g., 1 Gbps) of a cable of the second downlink path 420b such that downlink packets are not lost. For example, the DU 320 may determine the data amount information indicating two downlink packets during a unit time.

The CU 310 may adjust an amount of downlink data to be transmitted, in response to the status message 710. The CU 310 may transmit downlink packets corresponding to user data 420 to the routing node 444 through the first downlink path 420a. The downlink packets may include a first downlink packet 701 and a second downlink packet 702. For example, the first downlink path 420a may process 10 downlink packets per unit time. The CU 310 may transmit up to a total of 10 downlink packets during the unit time. Accordingly, within the unit time, the CU 310 may transmit the first downlink packet 701 and the second downlink packet 702 to the routing node 444. The second downlink path 420b may process two downlink packets per unit time. The routing node 444 may transmit only two downlink packets during the unit time. Accordingly, the routing node 444 may transmit the first downlink packet 701 and the second downlink packet 702 to the DU 320 within the unit time.

The CU 310 may be transmitting downlink packets based on a first data amount (e.g., a desired buffer size). If there is no traffic control such as the transmission of the status message 710 from the DU 320, the CU 310 will transmit downlink packets based on a previously received status message. Accordingly, even though packet loss occurs in a path between the CU 310 and the DU 320, the desired buffer size of the first data amount may be maintained the same as a

previous value. Due to a transmission capacity between the DU 320 and the routing node 444 and a capacity limit of the buffer 544 of the routing node 444, not all of the lost packets may be recovered. Due to the loss of packets, service disconnection may occur in a terminal. Accordingly, by providing a second data amount (e.g., a desired buffer size) lower than the first data amount to the CU 310 through the status message 710, a loss rate of packets may be lowered. If the loss rate is lower than a certain level, in order to increase the data rate again, the DU 320 may transmit to the CU 310 information indicating an increased amount of data (e.g., a desired buffer size larger than the second data amount) compared to an amount previously provided to the CU 310. By adjusting a rate of downlink data (or the amount of downlink data) to be transmitted from the CU 310 through the status message 710 (e.g., the status message 410, the DDDS frame), the DU 320 may lower a packet loss rate in an F1-U section to be less than or equal to the certain level. As the packet loss rate is lowered to be less than or equal to the certain level, the service disconnection experienced in the terminal may decrease, and overall throughput through a network may increase.

In the present disclosure, an example in which one routing node is disposed between the CU 310 and the DU 320 has been described, but embodiments of the present disclosure are not limited thereto. In a situation in which a plurality of nodes are disposed between the CU 310 and the DU 320, packet loss occurring due to a speed difference between the nodes may also be resolved through an embodiment of the present disclosure. For example, among the plurality of nodes, if a data rate between nodes or a data rate between the DU 320 and a node (wherein the node is a node connected to the DU 320) is lower than a data rate between the CU 310 and a node (wherein the node is a node connected to the CU 310), the DU 320 may reduce the packet loss rate for a path between the CU 310 and the DU 320 through adjustment of an amount of data (e.g., a desired buffer size, a desired data rate).

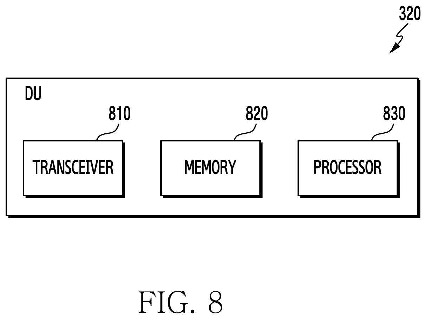

FIG. 8 illustrates an example of components of an electronic device (e.g., a DU 320) for downlink traffic control. The configuration exemplified in FIG. 8 may be understood as a configuration of a network entity (e.g., the DU 320) functioning as at least a part of a base station (e.g., the base station 110). Terms such as '... unit', '... device', and the like used hereinafter refer to a unit processing at least one function or operation, which may be implemented by hardware or a combination of hardware and software.

Referring to FIG. 8, an electronic device 800 may include a transceiver 810, memory 820, and a processor 830.

The transceiver 810 may perform functions for transmission and reception of signals in a wired communication environment. The transceiver 810 may include a wired interface for controlling a direct connection between devices through a transmission medium (e.g., copper wire or optical fiber). For example, the transceiver 810 may deliver an electrical signal to another device through a copper wire or may perform conversion between an electrical signal and an optical signal. The DU 220 may perform communication with a centralized unit (CU) (e.g., a CU 310) through the transceiver 810. The transceiver 810 may also perform functions for transmission and reception of signals in a wireless communication environment. For example, the transceiver 810 may perform a function of conversion between a baseband signal and a bit stream according to a physical layer specification of a system. For example, when transmitting data, the transceiver 810 may generate complex symbols by encoding and modulating a transmission bit stream. In addition, when receiving data, the transceiver 810 may restore a received bit stream by demodulating and decoding a baseband signal. In addition, the transceiver 810 may include a plurality of transmission and reception paths. According to an implementation example, the electronic device 800, as the DU 220, may directly perform communication with a UE (e.g., the terminal 120) through a wireless access network or perform communication with the UE (e.g., the terminal 120) through a radio unit (RU).

The transceiver 810 transmits and receives signals as described above. Accordingly, all or a part of the transceiver 810 may be referred to as a 'communication unit', a 'transmitter', a 'receiver', or a 'transceiver'. In addition, in the following description, transmission and reception performed through a wireless channel are used to mean including that the processing as described above is performed by the transceiver 810. Although only the transceiver 810 is illustrated in FIG. 8, according to another implementation example, the electronic device 800 may include two or more transceivers.

The memory 820 stores data such as a basic program, an application program, configuration information, and the like for an operation of the electronic device 800. The memory 820 may be referred to as a storage unit. The memory 820 may be configured as a volatile memory, a non-volatile memory, or a combination of the volatile memory and the non-volatile memory. In addition, the memory 820 may provide stored data according to a request of the processor 830. The memory 820, as a functional component, indicates a storage space. For example, the memory 820 may be understood as not only indicating memory (e.g., hard disk, flash memory, or RAM) disposed as a component in the electronic device 800 but also indicating a space for storing instructions and/or programs.

The processor 830 controls overall operations of the electronic device 800. The processor 880 may be referred to as a control unit. For example, the processor 830 transmits and receives signals through the transceiver 810 (or through a backhaul communication unit). In addition, the processor 830 records and reads data in the memory 820. In addition, the processor 830 may perform functions of a protocol stack (e.g., functions according to the protocols of FIGS. 2A, 2B, 3A, 3B, and 3C) required by a communication standard. Although only the processor 830 is illustrated in FIG. 8, according to another implementation example, the electronic device 800 may include two or more processors.

The configuration of the electronic device 800 illustrated in FIG. 8 is merely an example, and an example of components of an electronic device performing embodiments of the present disclosure are not limited to the configuration

illustrated in FIG. 8. In some embodiments, some configurations may be added, deleted, or changed.

Through traffic control of the DU (e.g., the DU 320) according to embodiments of the present disclosure, burstiness of packet admission may be prevented. By reducing packet loss that may occur in an F1-U section due to a difference between a transmission capacity between the DU 320 and a routing node and a transmission capacity between the CU 310 and the routing node, the DU 320 may provide smooth downlink traffic to a terminal.

The effects obtainable from the present disclosure are not limited to those mentioned above, and other effects not mentioned herein may be clearly understood by those of ordinary skill in the art to which the present disclosure belongs.

In embodiments, an electronic device of a lower network node is provided. The electronic device may comprise memory storing instructions, at least one transceiver, and at least one processor. The instructions, when executed by the at least one processor, may cause the electronic device to transmit, through the at least one transceiver to an upper network node, a first status message including first data amount information for a data radio bearer, receive, through the at least one transceiver from the upper network node, downlink (DL) data for the data radio bearer, determine second data amount information for the data radio bearer based on a packet loss metric for a path between the upper network node and the lower network node obtained from the downlink data, and transmit, through the at least one transceiver to the upper network node, a second status message including the second data amount information for the data radio bearer.

For example, the downlink data may be received via a routing node from the upper network node. An available data rate between the routing node and the lower network node may be lower than an available data rate between the upper network node and the routing node.

For example, each of the first status message and the second status message may correspond to a downlink (DL) data delivery status frame. Each of the first data amount information and the second data amount information may include a parameter for indicating a desired buffer size for the data radio bearer.

For example, each of the first status message and the second status message may correspond to a downlink (DL) data delivery status frame. Each of the first data amount information and the second data amount information may include a parameter for indicating an amount of data desired to be received within a specified time for the data radio bearer.

For example, the downlink data may be received through downlink (DL) user data frames from the upper network node. The packet loss metric may indicate a packet loss rate for the path between the upper network node and the lower network node, which is determined based on a sequence number for each packet of the downlink user data frames.

For example, the first data amount information may indicate a first value and the second data amount information may indicate a second value. The instructions, when executed by the at least one processor, may cause the electronic device to determine the second value being greater than the first value in a case that the packet loss metric is less than a first threshold, determine the second value being equal to the first value in a case that the packet loss metric is greater than or equal to the first threshold and less than a second threshold, and determine the second value being less than the first value in a case that the packet loss metric is greater than or equal to the second threshold.

For example, the first data amount information may indicate a first value and the second data amount information may indicate a second value. The instructions, when executed by the at least one processor, may cause the electronic device to determine the second value being greater than the first value in a case that the packet loss metric is less than a threshold, and determine the second value being less than the first value in a case that the packet loss metric is greater than or equal to the threshold.

For example, the second data amount information may be determined according to a size of an available buffer of the routing node for the data radio bearer and a magnitude of the packet loss metric.

For example, the downlink data may be received via a plurality of nodes from the upper network node. The plurality of nodes may include a first node connected to the upper network node and a second node connected to the lower network node. An available data rate between the second node and the lower network node or an available data rate between two nodes among the plurality of nodes may be lower than an available data rate between the upper network node and the first node.

For example, the upper network node may comprise a central unit (CU) configured to perform functions of a packet data convergence protocol (PDCP) layer. The lower network node may comprise a distributed unit (DU) configured to perform functions of a radio link layer (RLC) layer and a medium access control (MAC) layer.

In embodiments, a method performed by a lower network node may comprise transmitting, to an upper network node, a first status message including first data amount information for a data radio bearer, receiving, from the upper network node, downlink (DL) data for the data radio bearer, determining second data amount information for the data radio bearer based on a packet loss metric for a path between the upper network node and the lower network node obtained from the downlink data, and transmitting, to the upper network node, a second status message including the second data amount information for the data radio bearer.

For example, the downlink data may be received via a routing node from the upper network node. An available data rate between the routing node and the lower network node may be lower than an available data rate between the upper network node and the routing node.

For example, each of the first status message and the second status message may correspond to a downlink (DL)

data delivery status frame. Each of the first data amount information and the second data amount information may include a parameter for indicating a desired buffer size for the data radio bearer.

For example, each of the first status message and the second status message may correspond to a downlink (DL) data delivery status frame. Each of the first data amount information and the second data amount information may include a parameter for indicating an amount of data desired to be received within a specified time for the data radio bearer.

For example, the downlink data may be received through downlink (DL) user data frames from the upper network node. The packet loss metric may indicate a packet loss rate for the path between the upper network node and the lower network node, which is determined based on a sequence number for each packet of the downlink user data frames.

For example, the first data amount information may indicate a first value and the second data amount information may indicate a second value. Determining the second data amount information may comprise determining the second value being greater than the first value in a case that the packet loss metric is less than a first threshold, determining the second value being equal to the first value in a case that the packet loss metric is greater than or equal to the first threshold and less than a second threshold, and determining the second value being less than the first value in a case that the packet loss metric is greater than or equal to the second threshold.

For example, the first data amount information may indicate a first value and the second data amount information may indicate a second value. Determining the second data amount information may comprise determining the second value being greater than the first value in a case that the packet loss metric is less than a threshold, and determining the second value being less than the first value in a case that the packet loss metric is greater than or equal to the threshold.

For example, the second data amount information may be determined according to a size of an available buffer of the routing node for the data radio bearer and a magnitude of the packet loss metric.

For example, the downlink data may be received via a plurality of nodes from the upper network node. The plurality of nodes may include a first node connected to the upper network node and a second node connected to the lower network node. An available data rate between the second node and the lower network node or an available data rate between two nodes among the plurality of nodes may be lower than an available data rate between the upper network node and the first node.

For example, the upper network node may comprise a central unit (CU) configured to perform functions of a packet data convergence protocol (PDCP) layer. The lower network node may comprise a distributed unit (DU) configured to perform functions of a radio link layer (RLC) layer and a medium access control (MAC) layer.

In embodiments, a non-transitory computer-readable storage medium is provided. The non-transitory computer-readable storage medium may store instructions that, when executed by a processor of a lower network node, cause the lower network node to perform operations including transmitting, to an upper network node, a first status message including first data amount information for a data radio bearer, receiving, from the upper network node, downlink (DL) data for the data radio bearer, determining second data amount information for the data radio bearer based on a packet loss metric for a path between the upper network node and the lower network node obtained from the downlink data, and transmitting, to the upper network node, a second status message including the second data amount information for the data radio bearer.

In embodiments, an electronic device of a lower network node is provided. The electronic device may comprise at least one transceiver including one or more communication circuits and at least one processor including one or more processing circuits. The at least one processor may be configured to transmit, through the at least one transceiver to an upper network node, a first status message including first data amount information for a data radio bearer. The at least one processor may be configured to receive, through the at least one transceiver from the upper network node, downlink (DL) data for the data radio bearer. The at least one processor may be configured to determine second data amount information for the data radio bearer based on a packet loss metric for a path between the upper network node and the lower network node obtained from the downlink data. The at least one processor may be configured to transmit, through the at least one transceiver to the upper network node, a second status message including the second data amount information for the data radio bearer.

For example, the first data amount information may indicate a first value and the second data amount information may indicate a second value. The at least one processor may be configured to, in order to determine the second data amount information, determine the second value being greater than the first value in a case that the packet loss metric is less than a first threshold, determine the second value being equal to the first value in a case that the packet loss metric is greater than or equal to the first threshold and less than a second threshold, and determine the second value being less than the first value in a case that the packet loss metric is greater than or equal to the second threshold.

For example, the first data amount information may indicate a first value and the second data amount information may indicate a second value. The at least one processor may be configured to, in order to determine the second data amount information, determine the second value being greater than the first value in a case that the packet loss metric is less than a threshold, and determine the second value being less than the first value in a case that the packet loss metric is greater than or equal to the threshold.

In one or more embodiments, at least one of the components described in one or more of the preceding figures

may be configured to perform one or more operations, techniques, processes, and/or methods as described in the present disclosure. For example, a processor (e.g., a baseband processor) described in the present disclosure in connection with one or more of the preceding figures may be configured to operate according to one or more examples described in the present disclosure. For another example, a circuit associated with user equipment (UE), a base station, a network element, and the like, as described above in connection with one or more of the previous figures, may be configured to operate according to one or more examples described herein.

Any of the embodiments described above may be combined with any other embodiment (or combination of embodiments), unless explicitly stated otherwise. The foregoing description of one or more implementations provides an example and description, and is not intended to limit the scope of the embodiments to the precise form disclosed or to be exhaustive. Modifications and variations are possible in light of the above teachings or may be obtained from practice of various embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments of the present disclosure may be implemented as software including one or more instructions stored in a storage medium (e.g., the memory 820) readable by a machine (e.g., the DU 320 or an electronic device operating as the DU 320). For example, a processor (e.g., the processor 830) of the machine (e.g., the DU 320 or the electronic device operating as the DU 320) may call at least one instruction among the one or more instructions stored in the storage medium and execute it. This enables the machine to operate so as to perform at least one function according to the at least one called instruction. The one or more instructions may include code generated by a compiler or code executable by an interpreter. A storage medium readable by a machine may be provided in a form of a non-transitory storage medium. Herein, "non-transitory" merely means that the storage medium is a tangible device and does not include a signal (e.g., an electromagnetic wave), and the term does not distinguish between a case that data is stored in the storage medium semi-permanently and a case that data is stored temporarily.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure. The one or more programs may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. In the case of being distributed online, at least part of the computer program product may be temporarily generated or at least temporarily stored in the machine-readable storage medium, such as memory of the manufacturer's server, the application store's server, or a relay server.

Such a program (software module, software) may be stored in a random access memory, a non-volatile memory including a flash memory, a read only memory (ROM), an electrically erasable programmable read only memory (EEPROM), a magnetic disc storage device, an optical storage device (e.g., a compact disc-ROM (CD-ROM), digital versatile discs (DVDs), or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage

area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

According to various embodiments, one or more components or operations of the above-described components may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be executed sequentially, in parallel, repeatedly, or heuristically, or one or more of the operations may be executed in a different order or omitted, or one or more other operations may be added.

Meanwhile, specific embodiments have been described in the detailed description of the present disclosure, and of course, various modifications are possible without departing from the scope of the present disclosure.

## Claims

**1.** An electronic device of a lower network node, comprising:

memory storing instructions;
at least one transceiver; and
at least one processor,
wherein the instructions cause, when executed by the at least one processor, the electronic device to:

transmit, through the at least one transceiver to an upper network node, a first status message including first data amount information for a data radio bearer;
receive, through the at least one transceiver from the upper network node, downlink (DL) data for the data radio bearer;
determine second data amount information for the data radio bearer, based on a packet loss metric for a path between the upper network node and the lower network node obtained from the downlink data; and
transmit, through the at least one transceiver to the upper network node, a second status message including the second data amount information for the data radio bearer.

**2.** The electronic device of claim 1,

wherein the downlink data is received via a routing node from the upper network node, and
wherein an available data rate between the routing node and the lower network node is lower than an available data rate between the upper network node and the routing node.

**3.** The electronic device of claim 1,

wherein each of the first status message and the second status message corresponds to a downlink (DL) data delivery status frame, and
wherein each of the first data amount information and the second data amount information includes a parameter for indicating a desired buffer size for the data radio bearer.

**4.** The electronic device of claim 1,

wherein each of the first status message and the second status message corresponds to a downlink (DL) data delivery status frame, and
wherein each of the first data amount information and the second data amount information includes a parameter for indicating an amount of data desired to be received within a specified time for the data radio bearer.

**5.** The electronic device of claim 1,

wherein the downlink data is received through downlink (DL) user data frames from the upper network node, and
wherein the packet loss metric indicates a packet loss rate for the path between the upper network node and the lower network node, which is determined based on a sequence number for each packet of the downlink user data frames.

**6.** The electronic device of claim 1,

wherein the first data amount information indicates a first value and the second data amount information indicates a second value, and
wherein the instructions cause, when executed by the at least one processor, the electronic device to:

determine the second value being greater than the first value in a case that the packet loss metric is less than a first threshold,
determine the second value being equal to the first value in a case that the packet loss metric is greater than or equal to the first threshold and less than a second threshold, and
determine the second value being less than the first value in a case that the packet loss metric is greater than or equal to the second threshold.

**7.** The electronic device of claim 1,

wherein the first data amount information indicates a first value and the second data amount information indicates a second value, and
wherein the instructions cause, when executed by the at least one processor, the electronic device to:

determine the second value being greater than the first value in a case that the packet loss metric is less than a threshold, and
determine the second value being less than the first value in a case that the packet loss metric is greater than or equal to the threshold.

**8.** The electronic device of claim 1, wherein the second data amount information is determined according to a size of an available buffer of the routing node for the data radio bearer and a magnitude of the packet loss metric.

**9.** The electronic device of claim 1,

wherein the downlink data is received via a plurality of nodes from the upper network node,
wherein the plurality of nodes includes a first node connected to the upper network node and a second node connected to the lower network node, and
wherein an available data rate between the second node and the lower network node or an available data rate between two nodes among the plurality of nodes is lower than an available data rate between the upper network node and the first node.

**10.** The electronic device of claim 1,

wherein the upper network node comprises a central unit (CU) configured to perform functions of a packet data convergence protocol (PDCP) layer, and
wherein the lower network node comprises a distributed unit (DU) configured to perform functions of a radio link layer (RLC) layer and a medium access control (MAC) layer.

**11.** A method performed by a lower network node, the method comprising:

transmitting, to an upper network node, a first status message including first data amount information for a data radio bearer;
receiving, from the upper network node, downlink (DL) data for the data radio bearer;
determining second data amount information for the data radio bearer, based on a packet loss metric for a path between the upper network node and the lower network node obtained from the downlink data; and
transmitting, to the upper network node, a second status message including the second data amount information

for the data radio bearer.

**12.** The method of claim 11,

wherein the downlink data is received via a routing node from the upper network node, and
wherein an available data rate between the routing node and the lower network node is lower than an available data rate between the upper network node and the routing node.

**13.** The method of claim 11,

wherein each of the first status message and the second status message corresponds to a downlink (DL) data delivery status frame, and
wherein each of the first data amount information and the second data amount information includes a parameter for indicating a desired buffer size for the data radio bearer.

**14.** The method of claim 11,

wherein each of the first status message and the second status message corresponds to a downlink (DL) data delivery status frame, and
wherein each of the first data amount information and the second data amount information includes a parameter for indicating an amount of data desired to be received within a specified time for the data radio bearer.

**15.** A non-transitory computer-readable storage medium, storing instructions that cause, when executed by a processor of a lower network node, the lower network node to perform operations including:

transmitting, to an upper network node (central unit (CU)), a first status message including first data amount information for a data radio bearer,
receiving, from the upper network node, downlink (DL) data for the data radio bearer,
determining second data amount information for the data radio bearer, based on a packet loss metric for a path between the upper network node and the lower network node obtained from the downlink data, and
transmitting, to the upper network node, a second status message including the second data amount information for the data radio bearer.

110
120

FIG. 1A

110-1
110-2
120

FIG. 1B

UE (110)
gNB (120)
AMF (235)
NAS
NAS
RRC
RRC
PDCP
PDCP
RLC
RLC
MAC
MAC
PHY
PHY

FIG. 2A

UE (110)
gNB (120)
SDAP
SDAP
PDCP
PDCP
RLC
RLC
MAC
MAC
PHY
PHY

FIG. 2B

310
CU
RRC
311
PDCP
312
340
320
DU
RLC
321
MAC
322
PHY
323

FIG. 3A

310
CU
SDAP
361
PDCP
362
350
320
DU
RLC
371
MAC
372
PHY
373

FIG. 3B

310
CU
SDAP
361
PDCP
362
320
330
DU
RLC
371
MAC
372
PHY
373
DU
RLC
381
MAC
382
PHY
383

FIG. 3C

CU
310
410
420
DU
320

FIG. 4A

CU
310
410b
420a
Node
444
410a
420b
DU
320

FIG. 4B

310
CU
420a
444
Node
Bufffer
420b
320
DU
501
502
503
504
505
544
502
503
504
505
501

FIG. 5

TRANSMIT FIRST STATUS MESSAGE INCLUDING FIRST DATA AMOUNT INFORMATION FOR DATA RADIO BEARER TO CU
601
RECEIVE DOWNLINK DATA
603
DETERMINE SECOND DATA AMOUNT INFORMATION BASED ON PACKET LOSS METRIC
605
TRANSMIT SECOND STATUS MESSAGE INCLUDING SECOND DATA AMOUNT INFORMATION FOR DATA RADIO BEARER TO CU
607

FIG. 6

444
310
710
420a
420b
320
CU
Node
DU
Bufffer
701
702
703
704
544
701
702
703
704

FIG. 7A

444
310
710
420a
420b
320
CU
Node
DU
701
702
701
702

FIG. 7B

320
DU
810
820
830
TRANSCEIVER
MEMORY
PROCESSOR

FIG. 8

## INTERNATIONAL SEARCH REPORT

International application No.
**PCT/KR2024/016707**

**A. CLASSIFICATION OF SUBJECT MATTER**

**H04W 28/02**(2009.01)i; **H04W 88/08**(2009.01)i; **H04W 80/02**(2009.01)i

According to International Patent Classification (IPC) or to both national classification and IPC

**B. FIELDS SEARCHED**

Minimum documentation searched (classification system followed by classification symbols)

H04W 28/02(2009.01); H04W 40/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DL data deliver status frame, sequence number, packet loss rate, desired data amount, packet loss metric, downlink data, data rate

**C. DOCUMENTS CONSIDERED TO BE RELEVANT**

| Category* | Citation of document, with indication, where appropriate, of the relevant passages | Relevant to claim No. |
|---|---|---|
| A | SAMSUNG. Leftover issues on SL relay service continuity. R3-235472, 3GPP TSG-RAN WG3 #121bis. Xiamen, China. 28 September 2023. See sections 2-3. | 1-15 |
| A | US 2020-0296651 A1 (SAMSUNG ELECTRONICS CO., LTD.) 17 September 2020 (2020-09-17) See paragraphs [0148]-[0164]; and claims 1-6. | 1-15 |
| A | LG ELECTRONICS INC. (TPs for 38.401, 37.483, 38.413, 38.423) Remaining open issues for service continuity enhancement. R3-237299, 3GPP TSG-RAN WG3 Meeting #122. Chicago, USA. 03 November 2023. See section 2.1. | 1-15 |
| A | LG ELECTRONICS INC. Further consideration on multi-path support. R3-235168, 3GPP TSG-RAN WG3 #121bis. Xiamen, China. 28 September 2023. See sections 2.6 and 9.2.2.7. | 1-15 |
| A | LENOVO. On ECN Marking, PDCP Discard and Data Forwarding. R3-237422, 3GPP TSG-RAN WG3 Meeting #122. Chicago, USA. 03 November 2023. See section 2.2. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 February 2025** | **21 February 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/016707**

| Patent document cited in search report | Publication date (day/month/year) | Patent family member(s) | Publication date (day/month/year) |
|---|---|---|---|
| US 2020-0296651 A1 | 17 September 2020 | KR 10-2017-0053326 A | 16 May 2017 |
| | | KR 10-2460350 B1 | 28 October 2022 |
| | | US 10694446 B2 | 23 June 2020 |
| | | US 11743801 B2 | 29 August 2023 |
| | | US 2017-0135023 A1 | 11 May 2017 |

Form PCT/ISA/210 (patent family annex) (July 2022)